# EUROPEAN PATENT SPECIFICATION

(11) **EP 1 325 244 B1**
(45) Date of publication and mention of the grant of the patent: **04.10.2006**
(21) Application number: 01972845.0
(22) Date of filing: 28.09.2001
(51) Int. Cl.: F16D 69/00

(54) **BRAKE DEVICE, DISC BRAKE, DRUM BRAKE AND METHOD FOR MANUFACTURING A BRAKE DEVICE**
BREMSVORRICHTUNG, SCHEIBENBREMSE, TROMMELBREMSE SOWIE VERFAHREN ZUR HERSTELLUNG EINER BREMSVORRICHTUNG
DISPOSITIF DE FREINAGE, FREIN A DISQUE, FREIN A TAMBOUR ET PROCEDE DE FABRICATION D'UN DISPOSITIF DE FREINAGE

(30) Priority: 28.09.2000 SE 0003482
(43) Date of publication of application: 09.07.2003
(73) Proprietor: Volvo Truck Corporation, 405 08 Göteborg (SE)
(72) Inventor: HULTEN, Johan, S-413 16 Göteborg (SE); FLINT, John, DK-5600 Faaborg (DK)
(74) Representative: Fröhling, Werner Otto
(86) International application number: PCT/SE2001/002103
(87) International publication number: WO 2002/027207

(56) References cited:
- PATENT ABSTRACTS OF JAPAN vol. 12, no. 466 (M-772) & JP 63 190 942 A (UEDASA CHUZOSHO K.K.) 08 August 1988

## Description

### TECHNICAL FIELD

The present invention relates to a brake device according to the preamble of claim 1. In particular, a brake device is concerned, in which the occurrence of brake squeal can be reduced by virtue of the design of a brake lining.

### STATE OF THE ART

When vehicles are braked, what is known as brake squeal sometimes arises, which occurs in the case of both disk brakes and drum brakes. Typical frequencies of this noise lie in the range of some kHz and lie within the range of sensitivity of human hearing. It is true that the sound generated decreases with distance from the sound source, but it can be as much as roughly 140 dB close to the brake. Town buses which stop repeatedly within densely populated areas are especially troublesome. Brake squeal is a common cause of complaints about new private cars, trucks and buses. Even though brake squeal does not affect the braking effect or by reason of that the safety, the problem is nevertheless of great significance and requires a solution. The problem also occurs in vehicles with what are known as ABS brakes.

JP-A-63 190 942 discloses a brake shoe having four brake shoe split pieces with different friction coefficients. Depending on the required average friction coefficient of the shoe, these split pieces are combined to reach this specific average friction coefficient.

Many analyses of the problem of brake squeal have been performed, and many different solutions have been tried. Attempts have been made, for example, to dimension components in the brake system in order to bring about a change in the natural frequency of the system, without in this way having succeeded in reducing sufficiently the occurrence of brake squeal of the brake system.

US 5145037, for example, discloses a disk brake in which it is intended to reduce the occurrence of brake squeal by virtue of end areas of the brake disk being chamfered within an area of which the extent is dependent on the width between claws forming part of a brake caliper, which claws bear a rear plate in which the brake lining is arranged.

Furthermore, a disk brake is previously known from US 4485989, in which it is intended to reduce brake squeal by virtue of the brake lining being provided with a portion made of lubricating solid material which makes possible lubrication of the brake disk.

Although the abovementioned proposals contribute to reducing the occurrence of brake squeal under certain given conditions, these solutions do not contribute to reducing the occurrence of brake squeal under varying load applied to the brake device. Problems may also arise in a disk brake with an arrangement for lubricating the brake disk owing to the fact that the braking capacity is initially reduced more than normally, when it is cold or wet.

### BRIEF DESCRIPTION OF THE INVENTION

One object of the invention is to provide a brake device in which the occurrence of brake squeal under varying load applied to the brake device is reduced. This object is achieved by means of a brake device according to the characterizing part of claim 1.

Another object of the invention is to provide a disk brake in which the occurrence of brake squeal under varying load applied to the brake device is reduced. This object is achieved by means of a brake device according to the characterizing part of claim 12.

A further object of the invention is to provide a drum brake in which the occurrence of brake squeal under varying load applied to the brake device is reduced. This object is achieved by means of a brake device according to the characterizing part of claim 13.

Yet another object of the invention is to provide a method for manufacturing a brake device in which the occurrence of brake squeal under varying load applied to the brake device is reduced. This object is achieved by means of a brake device according to the characterizing part of claim 14.

### Theoretical background of the invention

From "An Assumed Modes Method Approach to Disc Brake Squeal Analysis", Society of Automotive Engineers, 1999-01-1335 by Hultén and Flint, for example, it emerges that, on account of the rotational symmetry of a brake device, for example a brake disk, two modes exist for each natural frequency of the brake device. When a mode pair exists for a natural frequency, a wave can propagate through the brake device if excitation energy is supplied, in which case noise, what is known as brake squeal, can arise. When a brake lining interconnects a brake disk or alternatively a brake drum and a brake lining, the coupled modes are split up into separate natural frequencies for the system. Non-conservative forces, such as friction forces for example, tend to couple these freestanding modes and combine them into a common natural frequency, in which case brake squeal can arise.

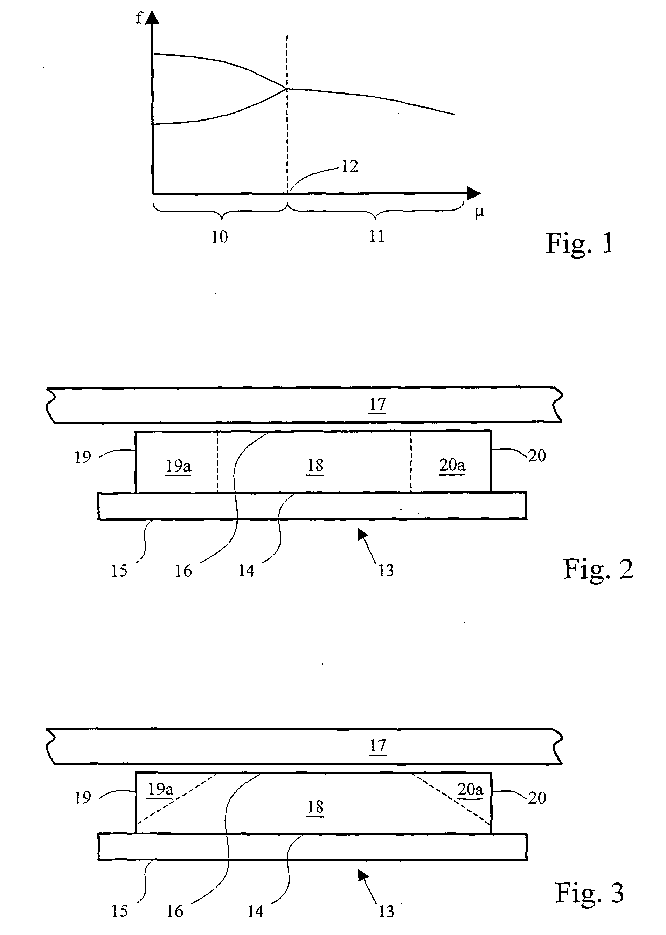

In order to avoid brake squeal occurring, the system thus needs to be designed so that separation of a set of modes, which principally have natural frequencies between 1 and 15 kHz, can be maintained. The coupling, and by reason of that the occurrence of brake squeal, can thus arise for a number of different natural frequencies and is dependent on the interaction between the lining and the brake device, that is to say either the disk or the drum. In order to allow the construction of a brake device in which the risk of brake squeal arising is reduced for the majority of natural frequencies, preferably all natural frequencies within the abovementioned range, it is important that the interaction between the lining and the disk or drum takes place in a predictable manner. Fig. 1 illustrates a situation in which an increase in the coefficient of friction gives rise to a coupling together of split modes, in which case a transition takes place from a stable state 10 to an unstable state 11 at a point 12 which corresponds to a critical level of the coefficient of friction. By virtue of the invention, this point 12 can be moved to a higher level, that is to say to the right along the µ axis of the diagram.

### DESCRIPTION OF FIGURES

The invention will be described in greater detail below with reference to the accompanying figures of the drawing, in which
- Fig. 1: is a curve chart in which the units frequency f and coefficient of friction µ illustrate the phenomenon of coupling of split modes;
- Fig. 2: is a side view of a brake lining according to the invention, and
- Fig. 3: is an alternative embodiment of a brake lining according to Fig. 2.

### DESCRIPTION OF ILLUSTRATIVE EMBODIMENT

Figure 2 shows a side view of a brake device 13 according to the invention. The brake device is arranged so as to interact in a known manner with a brake disk 17 or a brake drum by virtue of means which are not shown but are well known to the person skilled in the art. Examples of the interaction and the necessary component means for providing a functioning brake are given in, for example, US 5145037 and GB 2143916, an example of a disk brake in which a brake device according to the invention can be used, and SE 504 272, an example of a drum brake in which a brake device according to the invention can be used. The brake device 13 comprises a brake lining 14 and a rear plate 15. The brake lining 14 and the rear plate 15 are preferably made in one piece. Alternatively, the brake lining can be fixed to the rear plate in a manner well known to the person skilled in the art. The brake lining constitutes a wearing surface when the brake device is used for braking, and the rear plate distributes the pressing force from brake cylinders (not shown) to the brake lining when the brake device is used in a brake. An example of the design of a brake with brake cylinders is given in, for example, US 5145037.

For a disk brake, the brake device is plane, that is to say a plane lining is fixed to a plane rear plate. For a drum brake, the brake device is convex, that is to say a convex brake lining is fixed to the outside of a semicircular rear plate. The brake device is advantageously designed so that it fits existing brake arrangements in vehicles, that is to say the brake device according to the invention can be used as an exchange component on existing brake arrangements.

The brake lining has a contact surface 16 which is intended to be pressed against a brake disk 17 or, as the case may be, against a brake drum. The lining also has side edges 18 and end edges 19, 20. According to the invention, the brake lining 14 is designed in such a way that the coefficient of friction varies in the longitudinal direction between the two end edges 19, 20 in such a manner that at least one of the end edge portions 19a, 20a of the brake lining has a lower coefficient of friction than the remaining part of the brake lining. This variation can take place either gradually along the end edge portion, or in a stepped manner in the border portion between the end edge portion and the remaining part of the brake lining. This variation can take place at either end edge or at both end edges. The difference in the coefficient of friction between this end portion and the remaining part of the brake lining is suitably at least roughly 5%. According to an advantageous variant of the invention, the difference in the coefficient of friction is at least 10%. According to another advantageous variant of the invention, the difference in the coefficient of friction is at least 15%. According to another advantageous variant of the invention, the difference in the coefficient of friction is at least 20%.

The length of the end portion 19a, 20a is suitably between 5 and 40% of the total distance between the end edges 19, 20. According to an advantageous variant of the invention, the length of the end portion is suitably between 10 and 30% of the total distance between the end edges 19, 20. The variation in the coefficient of friction does not have to be limited to the end edge portions 19a, 20a but can also be distributed over the entire length of the brake lining, so that one end edge has a lower coefficient of friction than the other. In this connection, the variation in the coefficient of friction can take place in a stepped manner or continuously.

Figure 3 shows a side view of an alternative embodiment of a brake device 13 according to the invention. As described above, at least one of the end edge portions 19a, 20a of the brake lining has a lower coefficient of friction than the remaining part of the brake lining here as well. In this case, the border portion is not vertical in the brake lining, but the border portion is inclined. The inclination is such that the extent of the end edge portions 19a, 20a is greatest at the contact side 16 of the brake lining and decreases in the direction toward the rear plate 15. The inclination can be such that the end edge portions 19a, 20a stop somewhere along the end edges 19, 20, as shown in Figure 3, or such that the end edge portions 19a, 20a stop somewhere along the rear plate 15. This variation can take place either gradually along the end edge portion, or in a stepped manner in the border portion between the end edge portion and the remaining part of the brake lining. This variation can take place at either end edge or at both end edges. As the brake lining wears, that is to say as the brake lining 14 becomes thinner, the brake arrangement 13 becomes more rigid, which reduces the risk of brake squeal. This means that the extent of the end edge portions, which have a lower coefficient of friction than the remaining part of the brake lining, can decrease as the brake lining becomes thinner. The advantage of this design is therefore that it maximizes the braking properties of the brake lining without brake squeal arising.

The brake lining and the rear plate are manufactured from materials well known to the person skilled in the art.

The invention also relates to a method for manufacturing a brake device comprising a rear plate bearing a brake lining which has at least one contact surface and side edges and end edges, the brake lining being designed so that its coefficient of friction varies in the longitudinal direction between the two end edges 19, 20.

For manufacturing the brake device, the brake lining is formed first, from various friction materials. In order for the brake lining to be as homogeneous as possible, the brake lining and the end edge portions 19a, 20a of the brake lining are formed in the same process. This process, which is well known to the person skilled in the art, is similar to that for manufacturing brake linings made of one material and can be based on, for example, molding, extrusion or pressing. In this process, the component friction materials are applied simultaneously via separate nozzles. The brake lining is then finished in a manner well known to the person skilled in the art. The linings are often manufactured in larger units, for example, which are then sawn into disks. Grooves can also be milled into the linings. The lining is then fixed to the rear plate in a manner well known to the person skilled in the art, by means of, for example, a suitable adhesive.

The invention can be used for a variety of types of disk brakes and drum brakes well known to the person skilled in the art.

## Claims

1. A brake device (13) comprising a rear plate (15) bearing a brake lining (14) which has at least one contact surface (16) and side edges (18) and end edges (19, 20), **characterized in that** the coefficient of friction of the brake lining (14) varies in the longitudinal direction between the two end edges (19, 20) in such a manner that at least one of the end edge portions (19a; 20a) of the brake lining has a lower coefficient of friction than the remaining part of the brake lining, and in which the brake lining (14) and the rear plate (15) constitute one piece.

2. The brake device as claimed in claim 1, **characterized in that** the variation takes place gradually in the end edge portion (19a, 20a) between the end edge (19; 20) and the remaining part of the brake lining.

3. The brake device as claimed in claim 1, **characterized in that** the variation takes place in a stepped manner in a border portion between the end edge portion (19a; 20a) and the remaining part of the brake lining.

4. The brake device as claimed in claim 1, **characterized in that** the variation takes place in a stepped manner from one end edge to the other, so that one end edge (19; 20) has a lower coefficient of friction than the other.

5. The brake device as claimed in claim 1, **characterized in that** the variation takes place gradually from one end edge to the other, so that one end edge (19; 20) has a lower coefficient of friction than the other.

6. The brake device as claimed in any one of claims 1-5, **characterized in that** the difference in the coefficient of friction is at least roughly 5%.

7. The brake device as claimed in any one of claims 1-6, **characterized in that** the difference in the coefficient of friction is at least roughly 10%.

8. The brake device as claimed in any one of claims 1-7, **characterized in that** the difference in the coefficient of friction is at least roughly 15%.

9. The brake device as claimed in any one of claims 1-8, **characterized in that** the difference in the coefficient of friction is at least roughly 20%.

10. The brake device as claimed in claim 2 or 3, **characterized in that** the length of the end portion (19a; 20a) is between 5 and 40% of the distance between the end edges (19, 20).

11. The brake device as claimed in claim 10, **characterized in that** the length of the end portion (19a; 20a) is between 10 and 30% of the distance between the end edges (19, 20).

12. A disk brake comprising a brake device as claimed in any one of claims 1-11.

13. A drum brake comprising a brake device as claimed in any one of claims 1-11.

14. A method for manufacturing a brake device consisting of a brake lining (14) and a rear plate (15), comprising the steps:
manufacturing the brake lining (14) from two or more friction materials so that its coefficient of friction varies in the longitudinal direction between the two end edges (19, 20) of the brake lining (14), and
fixing the brake lining (14) to the rear plate (15).

## Patentansprüche

1. Bremsvorrichtung (13) mit einer Rückplatte (15), die einen Bremsbelag (14) trägt, der wenigstens eine Kontaktfläche (16) und Seitenränder (18) und Stirnränder (19, 20) aufweist, **dadurch gekennzeichnet, dass** der Reibungskoeffizient des Bremsbelags (14) sich in Längsrichtung zwischen den zwei Stirnrändern (19, 20) so verändert, dass wenigstens einer der Stirnrandabschnitte (19a; 20a) des Bremsbelags einen geringeren Reibungskoeffizient hat, als der verbleibende Teil des Bremsbelags, und wobei der Bremsbelag (14) und die Rückplatte (15) ein Teil bilden.

2. Bremsvorrichtung nach Anspruch 1, **dadurch gekennzeichnet, dass** die Veränderung in dem Stirnrandabschnitt (19a, 20a) zwischen dem Stirnrand (19; 20) und dem verbleibenden Teil des Bremsbelags allmählich stattfindet.

3. Bremsvorrichtung nach Anspruch 1, **dadurch gekennzeichnet, dass** die Veränderung stufenweise in einem Grenzabschnitt zwischen dem Stirnrandabschnitt (19a; 20a) und dem verbleibenden Teil des Bremsbelags stattfindet.

4. Bremsvorrichtung nach Anspruch 1, **dadurch gekennzeichnet, dass** die Veränderung stufenweise von einem Stirnrand zu dem anderen stattfindet, so dass ein Stirnrand (19; 20) einen geringeren Reibungskoeffizient hat als der andere.

5. Bremsvorrichtung nach Anspruch 1, **dadurch gekennzeichnet, dass** die Veränderung allmählich von einem Stirnrand zu dem anderen stattfindet, so dass ein Stirnrand (19; 20) einen geringeren Reibungskoeffizient hat als der andere.

6. Bremsvorrichtung nach einem der Ansprüche 1 bis 5, **dadurch gekennzeichnet, dass** der Unterschied in dem Reibungskoeffizient wenigstens ungefähr 5% beträgt.

7. Bremsvorrichtung nach einem der Ansprüche 1 bis 6, **dadurch gekennzeichnet, dass** der Unterschied in dem Reibungskoeffizienten wenigstens ungefähr 10% beträgt.

8. Bremsvorrichtung nach einem der Ansprüche 1 bis 7, **dadurch gekennzeichnet, dass** der Unterschied in dem Reibungskoeffizienten wenigstens ungefähr 15% beträgt.

9. Bremsvorrichtung nach einem der Ansprühe 1 bis 8, **dadurch gekennzeichnet, dass** der Unterschied in dem Reibungskoeffizienten wenigstens ungefähr 20% beträgt.

10. Bremsvorrichtung nach Anspruch 2 oder 3, **dadurch gekennzeichnet, dass** die Länge des Stirnabschnitts (19a; 20a) zwischen 5 und 40% des Abstandes zwischen den Stirnrändern (19, 20) beträgt.

11. Bremsvorrichtung nach Anspruch 10, **dadurch gekennzeichnet, dass** die Länge des Stirnabschnitts (19a; 20a) zwischen 10 und 30% des Abstandes zwischen den Stirnrändern (19, 20) beträgt.

12. Scheibenbremse mit einer Bremsvorrichtung nach einem der Ansprüche 1 bis 11.

13. Trommelbremse mit einer Bremsvorrichtung nach einem der Ansprüche 1 bis 11.

14. Verfahren zur Herstellung einer Bremsvorrichtung, die aus einem Bremsbelag (14) und einer Rückplatte (15) besteht, mit den Schritten
der Herstellung des Bremsbelages (14) aus zwei oder mehr Reibungsmaterialien, so dass sich sein Reibungskoeffizient in der Längsrichtung zwischen den zwei Stirnrändern (19, 20) des Bremsbelages (14) ändert, und
der Befestigung des Bremsbelages (14) an der Rückplatte (15).

## Revendications

1. Dispositif formant frein (13) comportant une plaque arrière (15) supportant une garniture de frein (14) qui a au moins une surface de contact (16) et des bords latéraux (18) et des bords d'extrémité (19, 20), **caractérisé en ce que** le coefficient de frottement de la garniture de frein (14) varie dans la direction longitudinale entre les deux bords d'extrémité (19, 20) d'une manière telle qu'au moins une des parties de bord d'extrémité (19a ; 20a) de la garniture de frein a un coefficient de frottement inférieur à la partie restante de la garniture de frein, et dans lequel la garniture de frein (14) et la plaque arrière (15) constituent une pièce.

2. Dispositif formant frein selon la revendication 1, **caractérisé en ce que** la variation a lieu graduellement dans la partie de bord d'extrémité (19a, 20a) entre le bord d'extrémité (19 ; 20) et la partie restante de la garniture de frein.

3. Dispositif formant frein selon la revendication 1, **caractérisé en ce que** la variation a lieu d'une manière étagée dans une partie de bordure entre la partie de bord d'extrémité (19a ; 20a) et la partie restante de la garniture de frein.

4. Dispositif formant frein selon la revendication 1, **caractérisé en ce que** la variation a lieu d'une manière étagée d'un premier bord d'extrémité à l'autre, de sorte que le premier bord d'extrémité (19 ; 20) a un coefficient de frottement inférieur à l'autre.

5. Dispositif formant frein selon la revendication 1, **caractérisé en ce que** la variation a lieu graduellement d'un premier bord d'extrémité à l'autre, de sorte qu'un premier bord d'extrémité (19 ; 20) a un coefficient de frottement inférieur à l'autre.

6. Dispositif formant frein selon l'une quelconque des revendications 1 à 5, **caractérisé en ce que** la différence de coefficient de frottement est au moins grossièrement de 5 %.

7. Dispositif formant frein selon l'une quelconque des revendications 1 à 6, **caractérisé en ce que** la différence de coefficient de frottement est au moins grossièrement de 10 %.

8. Dispositif formant frein selon l'une quelconque des revendications 1 à 7, **caractérisé en ce que** la différence de coefficient de frottement est au moins grossièrement de 15 %.

9. Dispositif formant frein selon l'une quelconque des revendications 1 à 8, **caractérisé en ce que** la différence de coefficient de frottement est au moins grossièrement de 20 %.

10. Dispositif formant frein selon la revendication 2 ou 3, **caractérisé en ce que** la longueur de la partie d'extrémité (19a ; 20a) est entre 5 et 40 % de la distance entre les bords d'extrémité (19, 20).

11. Dispositif formant frein selon la revendication 10, **caractérisé en ce que** la longueur de la partie d'extrémité (19a ; 20a) est entre 10 et 30 % de la distance entre les bords d'extrémité (19, 20).

12. Frein à disque comportant un dispositif formant frein selon l'une quelconque des revendications 1 à 11.

13. Frein à tambour comportant un dispositif formant frein selon l'une quelconque des revendications 1 à 11.

14. Procédé pour fabriquer un dispositif formant frein consistant en une garniture de frein (14) et une plaque arrière (15), comportant les étapes consistant à :
fabriquer la garniture de frein (14) à partir de deux matériaux de frottement ou plus, de sorte que son coefficient de frottement varie dans la direction longitudinale entre les deux bords d'extrémité (19, 20) de la garniture de frein (14), et
fixer la garniture de frein (14) sur la plaque arrière (15).
